(19) Europäisches Patentamt
European Patent Office
Office européen des brevets

(11) Veröffentlichungsnummer: **0 000 510**
**B1**

(12) **EUROPÄISCHE PATENTSCHRIFT**

(21) Anmeldenummer: **78100380.1**

(22) Anmeldetag: **12.07.78**

(51) Int. Cl.³: **C 08 G 63/64**, C 08 G 63/66

(54) **Carbonatgruppen enthaltende Polyester**

(30) Priorität: **20.07.77 DE 2732718**

(43) Veröffentlichungstag der Anmeldung: **07.02.79 Patentblatt 79/03**

(45) Bekanntmachung des Hinweises auf die Patenterteilung: **03.09.80 Patentblatt 80/18**

(84) Benannte Vertragsstaaten: **DE FR GB NL**

(56) Entgegenhaltungen:
**DE - A - 1 964 998**
**FR - A - 1 401 635**

(73) Patentinhaber: **Bayer AG, Zentralbereich Patente, Marken und Lizenzen, D - 5090 Leverkusen 1, Bayerwerk (DE)**

(72) Erfinder: **Lindner, Christian, Dr., Riehler Strasse 200, D - 5000 Köln 60 (DE)**
**Süling, Carlhans, Dr Carl-Leverkus Strasse 10 D - 5068 Odenthal (DE)**
**Bartl, Herbert, Dr Eichendorffweg 10 D - 5068 Odenthal (DE)**
**Hardt, Dietrich, Dr. Nietzschestrasse 8 D - 5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 510 B1

Courier Press, Leamington Spa, England.

## Carbonatgruppen enthaltende Polyester

Die Erfindung betrifft Carbonatgruppen enthaltende aliphatische Polyester und ein Verfahren zu ihrer Herstellung. Aliphatische Polyester können durch Kondensation von Diolen mit Dicarbonsäuren oder Dicarbonsäurederivaten oder durch Polykondensation von Hydroxycarbonsäuren oder Lactonen hergestellt werden. Sie haben meist relativ niedrige Molekulargewichte bis zu einigen Tausend und können als Diolkomponenten bei der Herstellung von Polyurethanen verwendet werden. Es wurde gefunden, daß man Carbonatgruppen enthaltende aliphatische Polyester mit Molekulargewichten über 20 000 erhält, wenn man Polyesterdiole, bevorzugt mit Molekulargewichten $\overline{M}n$ von 800, insbesondere von 1400 bis etwa 3500, mit bifunktionellen Kohlensäurederivaten in möglichst äquimolaren Mengen im Vakuum (unterhalb 35 Torr, bevorzugt bei 25 bis 1 Torr) bei einer Temperatur zwischen 100°C und 300°C, vorzugsweise 130 bis 200°C, in Gegenwart von Katalysatoren polykondensiert und die dabei entstehenden Kondensationsprodukte abdestilliert. Molekulargewichte sind hier und im folgenden immer das Zahlenmittel ($\overline{M}n$) des Molekulargewichts.

Gegenstand der Erfindung sind somit Carbonatgruppen enthaltende Polyester, die aus wiederkehrenden Struktureinheiten der Formel

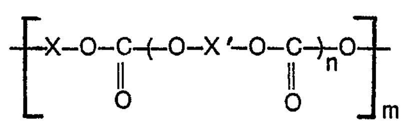

(I)

aufgebaut sind, in der

X der Rest eines Umsetzungsproduktes eines mehrwertigen Alkohols mit einer mehrwertigen aliphatischen Carbonsäure mit einem Molekulargewicht von 800 bis 3500 ist,

X' = X oder den Rest eines aliphatischen Polyäthers vom Molekulargewicht 800 bis 3500 darstellt,

n ist = 0 oder 1 bis 10 und

m eine Zahl > 20, bevorzugt 22 bis 100, bedeutet, wobei die Grenzviskosität in Tetrahydrofuran (Staudinger-Index) $[\eta]$ 0,8 bis 2,5 $\frac{dl}{g}$ ist.

Umsetzungsprodukte von mehrwertigen Alkoholen mit mehrwertigen aliphatischen Carbonsäuren sind bevorzugt solche von zweiwertigen und gegebenenfalls zusätzlich dreiwertigen Alkoholen mit vorzugsweise zweiwertigen aliphatischen Carbonsäuren. Anstelle der freien Carbonsäuren können auch deren Anhydride oder Ester mit niederen Alkoholen oder deren Gemische verwendet werden. Die mehrwertigen Carbonsäuren sind bevorzugt acyclisch. Als Beispiele seien genannt Oxalsäure, Malonsäure, Bernsteinsäure, Adipinsäure, Korksäure, Azelainsäure, Sebacinsäure, Hexahydrophthalsäureanhydrid, Glutarsäureanhydrid.

Als mehrwertige Alkohole kommen, gegebenenfalls im Gemisch miteinander, z.B. Äthylenglykol, Propylenglykol-(1,2) und -(1,3, Butylenglykol-(1,4) und -(2,3), Hexandiol-(1,6), Octandiol-(1,8), Neopentylglykol, Cyclohexandimethanol, 1,4-Bis-(hydroxymethylcyclohexan), 2-Methyl-1,3-propandiol, Diäthylenglykol, Triäthylenglykol, Tetraäthylenglykol, Dipropylenglykol und Dibutylenglykol in Frage.

Die aus diesen Carbonsäuren und Alkoholen erhaltenen Umsetzungsprodukte stellen Polyester mit endständigen Hydroxylgruppen dar. Sie haben Molekulargewichte von ca. 800 bis ca. 3500, sie können durch die Formel HO—X—OH symbolisiert werden, wobei X die oben angegebene Bedeutung hat. Wie bereits angegeben, entstehen die erfindungsgemäßen Carbonatgruppen enthaltenden Polyester aus diesen Polyestern mit endständigen Hydroxylgruppen durch Umsetzung mit bifunktionellen Kohlensäurearylestern.

Bifunktionelle Kohlensäurearylester sind insbesondere die der Formel (II)

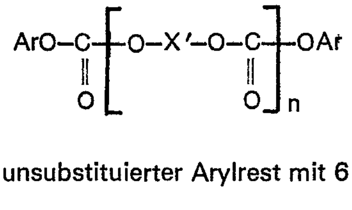

(II)

worin

Ar ein substituierter oder unsubstituierter Arylrest mit 6 bis 18 C-Atomen, vorzugsweise mit 6 C-Atomen, ist,

n = 0 oder 1 bis 10 ist und

X' der bivalente Rest eines Polyesters oder Polyäthers, wie weiter oben definiert.

Solche Verbindungen sind bekannt.

Zur Umsetzung der Hydroxylgruppen enthaltenden Polyester und der Kohlensäurearylester sind geeignete Katalysatoren die Umesterungskatalysatoren, wie beispeilsweise Alkali- oder Erdalkaliphenolate, Alkali- oder Erdalkalialkoholate und tertiäre Amine, wie beispielsweise Triäthylendiamin, Morpholin, Pyrrolidin, Pyridin, Triäthylamin oder Metallverbindungen wie Antimontrioxid, Zinkchlorid, Titantetrachlorid und Titansäuretetrabutylester.

Der Katalysator wird in Mengen von 20 bis 200 ppm, bezogen auf das Gesamtgewicht der Polykondensationskomponenten, verwendet. Die Katalysatormengen können unterschritten werden, wenn die Ausgangsprodukte bei Verwendung der sauren Katalysatoren keine basischen, bei Verwendung der basischen Katalysatoren keine sauren Verunreinigungen enthalten; möglichst geringe Katalysatormengen sind bevorzugt, um Eigenfarbe der Produkte zu vermeiden.

Vorzugsweise wird in Substanz umgesetzt, also in Abwesenheit von Lösungsmitteln. Es können jedoch auch unter den Reaktionsbedingungen inerte Lösungsmittel wie Kohlenwasserstoffe, insbesondere aromatische Kohlenwasserstoffe, verwendet werden.

Die Reaktionszeit richtet sich nach der Reaktionstemperatur, der Art und Menge des verwendeten Katalysators und nach dem gewünschten Molekulargewicht des Carbonatgruppen enthaltenden Polyesters. Im allgemeinen genügen 2 bis 48 Stunden, vorzugsweise 4 bis 24 Stunden.

Die entstehenden flüchtigen Kondensationsprodukte können während der Reaktion entfernt werden, bei diskontinuierlicher Verfahrensweise destillative, bei kontinuierlicher Verfahrensweise durch fraktionierte Destillation. Bevorzugt wird mit Natriumphenolat als Katalysator eine Mischung aus Polyesterdiol und bifunktionellem Kohlensäurearylester, vorzugsweise Diphenylcarbonat, oder eine Mischung aus Diphenylcarbonat und Verbindungen der Formel (II) bei 110 bis 170°C polykondensiert und anschließend bei 170°C und höher durch Zufügen eines bifunktionellen Kohlensäurearylesters der Formel (II), bevorzugt mit $n \geqq 1$, unter gleichzeitiger destillativer Abtrennung flüchtiger Kondensationsprodukte die Viskosität des Polykondensationsgemischs erhöht. Es erwies sich als günstig, die Polykondensation in Hochviskos-Reaktoren wie Knetern oder Schneckenmaschinen durchzuführen.

Die Polykondensation kann in bekannter Weise, z.B. durch Absenken der reaktionstemperatur, Vernichten oder Entfernen des Katalysators oder durch sogenannte Stopper beendet werden. So hat es sich als vorteilhaft erwiesen, im Falle von Alkoholendgruppen Carbonsäurearylester und im Falle von Arylcarbonatendgruppen Alkohole als Stopper einzusetzen. Verwendet man bifunktionelle Verbindungen als Stopper, so ist es möglich, bei genauer Dosierung ein Abbrechen der Polykondensation unter Erhöhung des durchschnittlichen Molekulargewichtes zu erreichen.

Die erfindungsgemäßen Polyester können als polymere Weichmacher oder Zusatzstoffe für andere Kuntstoffe verwendet werden, wobei ihre gute Kautschukeigenschaft, Alterungsbeständigkeit und hervorragende Verarbeitbarkeit im Gemisch mit anderen Kunststoffen besonders auffallend sind. Sie können auch je nach Molekulargewicht und chemischer Zusammensetzung als Klebstoffe, Dichtungsmaterialien oder zur Beschichtung von Textilien Verwendung finden.

Die Grenzviskosität (Staudinger-Index) $[\eta]$ wurde in Tetrahydrofuran bei 25°C gemessen und ist in

$$\frac{dl}{g}$$

angegeben. Zur Definition s. H.G. Elias "Makromoleküle", Hüthig & Wepf-Verlag, Basel, Seite 265.

## Beispiel 1

2000 Gew.-Teile eines Polyesterdiols aus Adipinsäure und einer Mischung aus n-Hexan-1,6-diol/Neopentylglykol im Verhältnis 65/35 vom mittleren Molekulargewicht $\overline{M}n$ 2000 (bestimmt durch OH-Zahl-Messung), 214 Gew.-Teile Diphenylcarbonat und 0,12 Gew.-Teile Natriumphenolat werden unter Rühren und einem Vakuum von 1,5 Torr 2 Stunden bei 130°C und 1 Stunde bei 150°C gerührt, wobei man flüchtige Polykondensationsprodukte, die zum größten Teil aus Phenol bestehen, abdestilliert. Unter fortgesetzter Destillation steigert man die Temperatur für 4 Stunden auf 180°C; während dieser Zeit werden 20 Gew.-Teile eines über —OCOO-Brücken verlängerten Polytetrahydrofurandiols mit Phenylcarbonatendgruppen ($\overline{M}n$ des Polytetrahydrofuran 2000, Verlängerungsgrad gleich 2) zudosiert, anschließend steigert man unter langsamem Rühren oder Kneten die Reaktionstemperatur auf circa 185 bis 190°C für 5 Stunden. Das Produkt, eine farblose kautschukartige Masse, besitzt einen Staudinger-Index $[\eta]$, gemessen in THF, von 1,5.

## Beispiel 2

1800 Gew.-Teile eines Polyesterdiols aus Adipinsäure und n-Hexan-1,6-diol vom mittleren Molekulargewicht $\overline{M}n$ 1800 (bestimmt durch OH-Zahl-Messung), 214 Gew.-Teile Diphenylcarbonat und 0,11 Gew.-Teile Natriumphenolat werden unter Rühren und einem Vakuum von 0,5 Torr 2 Stunden bei 130°C und 1 Stunde bei 150°C gerührt, wobei man flüchtige Polykondensationsprodukte, die zum größten Teil aus Phenol bestehen, abdestilliert. Unter fortgesetzter Destillation steigert man die Temperatur für 4 Stunden auf 180°C; während dieser Zeit werden 35 Gew.-Teile eines über —OCOO

Brücken verlängerten Polyesterdiols mit Phenylcarbonatendgruppen ($\overline{M}$n des Polyesterdiols 2150, bestehend aus Adipinsäure und n-Hexan-1,6-diol, Verlängerungsgrad gleich 2) zudosiert, anschließend steigert man unter langsamem Rühren oder Kneten die Reaktionstemperatur auf 190°C für 4 Stunden, löst dann das Reaktionsgemisch nach Abkühlen auf 120°C in 1 Liter Toluol, fügt unter guter Durchmischung 20 Gew.-Teile des oben genannten Polyesterdiols hinzu und dampft nun das Toluol im Vakuum ab, wobei man langsam die Innentemperatur des reaktionsgemisches auf 220°C steigert; bei dieser Temperatur wird das Reaktionsgemisch 2 Stunden im Vakuum und sorgfältigem Abdampfen aller flüchtigen Produkte getrocknet. Das so gebildete farblose kautschukartige Material besitzt einen Staudinger-Index [$\eta$], gemessen in THF, von 1,35.

Beispiel 3

1000 Gew.-Teile eines Polyesterdiols aus Adipinsäure und einer Mischung aus n-Hexan-1,6-diol/Neopentylglykol im Verhältnis 65/35 vom mittleren Molekulargewicht $\overline{M}$n 2000 (bestimmt durch OH-Zahl-Messung), 107 Gew.-Teile Diphenylcarbonat und 0,12 Gew.-Teile Neatriumphenolat werden unter Rühren und einem Vakuum von 1,5 Torr 2 Stunden bei 130°C und 1/2 Stunde bei 150°C gerührt, wobei man flüchtige Kondensationsprodukte, die zum größten Teil aus Phenol bestehen, abdestilliert. Nach Abkühlen des Gemisches auf 130°C fügt man eine Mischung aus 900 Gew.-Teilen eines Polyesterdiols aus Adipinsäure und n-Hexan-1,6-diol vom mittleren Molekulargewicht $\overline{M}$n von 1800 (bestimmt durch OH-Zahl-Messung) und 107 Gew.-Teile Diphenylcarbonat hinzu. Anschließend rührt man 2 Stunden bei 130°C und 2 Stunden bei 160°C unter fortwährender Abdestillation flüchtiger Produkte; man steigert die Temperatur für 4 Stunden auf 180C; während dieser Zeit werden 22 Gew.-Teile eines über —OCCO-Brücken verlängerten Polytetrahydrofurandiols mit Phenylcarbonatendgruppen ($\overline{M}$n des Polytetrahydrofurandiols 2000, Verlängerungsgrad 2) zudosiert; anschließend steigert man unter langsamem Rühren oder Kneten die Reaktionstemperatur für 2 Stunden auf 185°C und für 4 Stunden auf 200°C.

Das Produkt, eine farblose kautschukartige Masse, besitzt einen Staudinger-Index [$\eta$], gemessen in THF, von 1,3.

Beispiel 4

2000 Gew.-Teile eines Polyesterdiols aus Adipinsäure und einer Mischung aus n-Hexan-1,6-diol/Neopentylglykol im Verhältnis 65:35 vom mittleren Molekulargewicht $\overline{M}_n$ 2000 (bestimmt durch OH-Zahl-Messung), 214 Gew.-Teile Diphenylcarbonat und 0,12 Gew.-Teile Natriumphenolat werden unter Rühren und einem Vakuum von 1,5 Torr 2 Stunden bei 130°C und 1 Stunde bei 150°C gerührt, wobei man flüchtige Polykondensationsprodukte, die größtenteils aus Phenol bestehen, abdestilliert. Unter festgesetzter Destillation steigert man die Temperatur für 6 Stunden auf 180°C und 2 Stunden auf 195°C. Das so erhaltene Produkte, eine farblose kautschukartige weiche Masse, besitzt einen Staudinger-Index [$\eta$], gemessen in THF, von 0,8.

**Patentansprüche**

1. Carbonatgruppen enthaltende Polyester, die aus wiederkehrenden Struktureinheiten der Formel

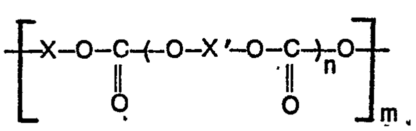

(I)

aufgebaut sind, in der

X den Rest eines Umsetzungsproduktes eines mehrwertigen:

aliphatischen Alkohols mit einer mehrwertigen aliphatischen Carbonsäure mit einem Molekulargewicht von 800 bis 3500,

X' = X oder den Rest eines aliphatischen Polyäthers vom Molekulargewicht 800 bis 3500 darstellt,

n = 0 oder 1 bis 10 und

m eine Zahl > 20 bedeutet,

wobei die Grenzviskosität im Tetrahydrofuran 0,8 bis 2,5

$$\frac{dl}{g}$$

ist.

**Revendication**

1. Des polyesters porteurs de groupes carbonate, qui sont formés de motifs structuraux récurrents de formule:

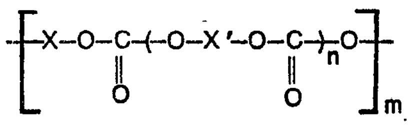 (I)

dans laquelle

X est le reste d'un produit de réaction d'un alcool aliphatique polyvalent avec un acide carboxylique aliphatique polyvalent de poids moléculaire compris entre 800 et 3500,

X' es égal à X ou est le reste d'un polyéther aliphatique de poids moléculaire compris entre 800 et 3500,

$n$ a une valeur de 0 ou 1 à 10 et

$m$ est un nombre supérieur à 20,

la viscosité limite dans le tétrahydrofuranne ayant une valeur de 0,8 à 2,5

$$\frac{dl}{g}$$

**Claim**

1. Polyesters containing carbonate groups and consisting of repeating structural units of the formula:

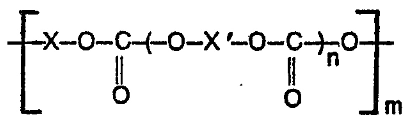 (I)

in which

X is the residue of a reaction product of a polyhydric aliphatic alcohol with a polybasic, aliphatic carboxylic acid having a molecular weight of from 800 to 3500,

X' has the same meaning as X or X' is the residue of an aliphatic polyether having a molecular weight of from 800 to 3500,

$n = 0$ or 1 to 10 and

$m$ is a number $> 20$,

having an intrinsic viscosity in tetrahydrofuran of from 0.8 to 2.5

$$\frac{dl}{g}$$